# EUROPÄISCHE PATENTSCHRIFT

(11) **EP 2 758 771 B1**
(45) Veröffentlichungstag und Bekanntmachung des Hinweises auf die Patenterteilung: **11.10.2017**
(21) Anmeldenummer: 12745672.1
(22) Anmeldetag: 02.08.2012
(51) Int. Cl.: G01N 27/407

(54) **MESSFÜHLER ZUR BESTIMMUNG MINDESTENS EINER EIGENSCHAFT EINES MESSGASES**
SENSOR FOR DETERMINING AT LEAST ONE PROPERTY OF A GAS TO BE MEASURED
CAPTEUR DE MESURE POUR DÉTERMINER AU MOINS UNE PROPRIÉTÉ D'UN GAZ À MESURER

(30) Priorität: 21.09.2011 DE 102011083098
(43) Veröffentlichungstag der Anmeldung: 30.07.2014
(73) Patentinhaber: Robert Bosch GmbH, 70442 Stuttgart (DE)
(72) Erfinder: HERRMANN, Sven, 71282 Hemmingen (DE); ROSENLAND, Marc, 74343 Hohenhaslach (DE)
(86) Internationale Anmeldenummer: PCT/EP2012/065131
(87) Internationale Veröffentlichungsnummer: WO 2013/041281

(56) Entgegenhaltungen:
- DE-A1-102006 049 006
- DE-A1-102007 037 549
- GB-A- 2 312 516
- US-A1- 2002 053 233
- US-B2- 6 945 091

## Beschreibung

### Stand der Technik

Aus dem Stand der Technik ist eine Vielzahl von Messfühlern und Verfahren zur Bestimmung mindestens einer Eigenschaft eines Messgases in einem Messgasraum bekannt. Dabei kann es sich grundsätzlich um beliebige physikalische und/oder chemische Eigenschaften des Gases handeln, wobei eine oder mehrere Eigenschaften erfasst werden können. Die Erfindung wird im Folgenden insbesondere unter Bezugnahme auf eine qualitative und/oder quantitative Erfassung einer Gaskomponente des Gases beschrieben, insbesondere unter Bezugnahme auf eine Erfassung eines Sauerstoffanteils in dem Gas. Der Sauerstoffanteil kann beispielsweise in Form eines Partialdrucks und/oder in Form eines Prozentsatzes erfasst werden. Alternativ oder zusätzlich sind jedoch auch andere Eigenschaften des Gases erfassbar, wie beispielsweise die Temperatur des Gases.

Beispielsweise können derartige Messfühler als sogenannte Lambdasonden ausgestaltet sein, wie sie beispielsweise aus Konrad Reif (Hrsg.): Sensoren im Kraftfahrzeug, 1. Auflage 2010, Seiten 160-165, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Alternativ ist jedoch ebenso die Ausbildung als Fingersonde möglich. Die Luftzahl λ beschreibt dieses Luft-Kraftstoff-Verhältnis.

Dabei ragt allgemein ein Sensorelement des Messfühlers in einer Längserstreckungsrichtung des Messfühlers aus dem Fühlergehäuse heraus. Diese Längserstreckungsrichtung oder auch Längsachse des Messfühlers kann dabei gleichzeitig eine Symmetrieachse des Messfühlers vorgeben, da bekannte Messfühler verbreitet einen rotationssymmetrischen Aufbau und Bezug auf die genannte Längsachse aufweisen. Des Weiteren ist entscheidend, dass das Sensorelement in einen direkten Kontakt mit dem Messgas bringbar sein muss. Daher weisen bei derartigen Messfühlern ein äußeres Schutzrohr sowie ein inneres Schutzrohr und gegebenenfalls ein zusätzlich vorhandenes zentrales Schutzrohr stets geeignete Öffnungen auf, um einen Durchtritt des umströmenden Messgases zu ermöglichen.

Üblicherweise werden das äußere Schutzrohr und das innere Schutzrohr an dem Fühlergehäuse derart befestigt, dass ein gehäuseseitiger Endabschnitt des inneren Schutzrohrs auf einen Ringabsatz des Fühlergehäuses aufgeschoben wird. Dazu kann der gehäuseseitige Endabschnitt des inneren Schutzrohrs eine Querschnittserweiterung aufweisen, so dass dieser Abschnitt als Ringschulter ausgebildet sein kann. Der gehäuseseitige Endabschnitt des äußeren Schutzrohrs ist wiederum in Längserstreckungsrichtung des Messfühlers gesehen auf den genannten Endabschnitt, d.h. die Ringschulter, des inneren Schutzrohrs und damit ebenfalls, allerdings mittelbar, auf den Ringabsatz des Fühlergehäuses aufgeschoben. Zur Festlegung dieses so gebildeten Doppelschutzrohrs an dem Fühlergehäuse wird gemäß dem Stand der Technik schließlich eine Schweißnaht gesetzt, welche vom gehäuseseitigen Endabschnitt des äußeren Schutzrohrs durch den darunterliegenden Endabschnitt des inneren Schutzrohrs bis in das Fühlergehäuse, insbesondere einen Ringabsatz des Fühlergehäuses, reicht.

Trotz der zahlreichen Vorteile der aus dem Stand der Technik bekannten Messfühler und Verfahren zum Festlegen des äußeren Schutzrohrs sowie des inneren Schutzrohrs an dem Fühlergehäuse beinhalten diese noch Verbesserungspotenzial. So ist beispielsweise das Anbringen einer Schweißnaht, welche ausgehend von dem äußeren Schutzrohr durch das innere Schutzrohr bis in das Fühlergehäuse verläuft, kompliziert und fehlerbehaftet, da mehrere benachbarte bzw. übereinanderliegende Teile miteinander zu verschweißen sind. Des Weiteren muss in den meisten Fällen ein inneres Schutzrohr verwendet werden, welches an seinem gehäuseseitigen Endabschnitt eine merkliche Querschnittserweiterung aufweist, um als Ringschulter auf einen Ringabsatz des Fühlergehäuses aufsteckbar zu sein. Ein solches inneres Schutzrohr bedingt daher einen erhöhten Material- und Fertigungsaufwand. Ferner hat die Praxis gezeigt, dass eine wie oben beschriebene Verbindung des Doppelschutzrohrs mit dem Fühlergehäuse oft nur eine unbefriedigende Stabilität und Haltbarkeit aufweist. Verbreitet kommt es zu einem Versagen der Verbindung des Doppelschutzrohrs mit dem Fühlergehäuse. Dies betrifft insbesondere Anwendungsfälle, bei denen der Messfühler sehr hohen Temperaturen oder großen Temperaturgradienten ausgesetzt ist, beispielsweise im Falle eines Einbaus des Messfühlers vor einem Turbolader. Des Weiteren erweisen sich die beschriebenen Verbindungen als ausgesprochen empfindlich gegenüber Temperaturwechseln mit großen Temperaturhüben und/oder großen Temperaturgradienten.

In der DE 10 2007 037549 A1, DE 10 2006 049006 A1, US 6 945 091 B2, US 2002/053233 A1 und GB 2 312 516 werden bereits bekannte Abgassensoren offenbart.

### Offenbarung der Erfindung

Es wird daher ein Messfühler zur Bestimmung mindestens einer physikalischen Eigenschaft eines Messgases in einem Messgasraum vorgeschlagen, der die Nachteile bekannter Messfühler zumindest weitgehend vermeidet.

Der Messfühler zur Bestimmung mindestens einer Eigenschaft eines Messgases in einem Messgasraum, insbesondere der Temperatur oder der Konzentration einer Gaskomponente, insbesondere im Abgas einer Brennkraftmaschine, umfasst ein Sensorelement, das mit einem dem Messgas ausgesetzten, gasseitigen Sensorabschnitt aus einem Fühlergehäuse herausragt, und ein den Sensorabschnitt umgebendes Doppelschutzrohr, welches mindestens ein äußeres Schutzrohr und mindestens ein inneres Schutzrohr aufweist, wobei das äußere Schutzrohr einen gehäuseseitigen Endabschnitt und einen gasseitigen Endabschnitt aufweist, wobei der Messfühler mindestens ein Befestigungselement zur Befestigung des Messfühlers an dem Messgasraum aufweist, wobei in einem an dem Messgasraum befestigten Zustand das äußere Schutzrohr mit dem gehäuseseitigen Endabschnitt an dem Fühlergehäuse außerhalb des Messgasraums befestigt ist.

Das Befestigungselement ist erfindungsgemäß zumindest teilweise an dem gehäuseseitigen Endabschnitt des äußeren Schutzrohrs aufgenommen und das Befestigungselement weist erfindungsgemäß mindestens ein Außengewinde auf und der gehäuseseitige Endabschnitt des äußeren Schutzrohrs ist erfindungsgemäß mit dem Fühlergehäuse an mindestens einer Schweißung verschweißt, die sich weiter entfernt von dem gasseitigen Endabschnitt des äußeren Schutzrohrs als das Befestigungselement befindet.

Das Fühlergehäuse kann eine Mittelachse aufweisen und die Schweißung kann sich in axialer oder radialer Richtung bezüglich der Mittelachse erstrecken. Das Fühlergehäuse kann einen Ringabsatz aufweisen und der gehäuseseitige Endabschnitt des äußeren Schutzrohrs kann an einer senkrecht zu der Mittelachse verlaufenden Fläche des Ringabsatzes befestigt sein. Der gehäuseseitige Endabschnitt des äußeren Schutzrohrs kann eine Wölbung aufweisen, die von der senkrecht zu der Mittelachse verlaufenden Fläche des Ringabsatzes vorsteht und ausgebildet ist, in einem montierten Zustand des Messfühlers mit der senkrecht zu der Mittelachse verlaufenden Fläche des Ringabsatzes eine dichte, insbesondere gasdichte, Verbindung zu bilden. Das innere Schutzrohr kann einen gehäuseseitigen Endabschnitt aufweisen und der gehäuseseitige Endabschnitt des inneren Schutzrohrs kann in das Fühlergehäuse, insbesondere in eine Sackbohrung in dem Fühlergehäuse, eingesteckt sein. Der gehäuseseitige Endabschnitt des inneren Schutzrohrs kann in dem Fühlergehäuse zentriert sein und insbesondere mittels Zentriernasen, welche an dem Fühlergehäuse und/oder an dem inneren Schutzrohr ausgebildet sind, zentriert sein. Das innere Schutzrohr kann einen gasseitigen Endabschnitt aufweisen und der gasseitige Endabschnitt des äußeren Schutzrohrs kann so ausgestaltet sein, dass dieser den gasseitigen Endabschnitt des inneren Schutzrohrs in axialer und/oder radialer Richtung formschlüssig festlegt. Der gasseitige Endabschnitt des äußeren Schutzrohrs kann in Richtung der Gasseite gesehen eine Querschnittsverjüngung aufweisen. Das Doppelschutzrohr kann ein zusätzliches zentrales Schutzrohr umgeben.

Unter der Gasseite ist im Rahmen der vorliegenden Erfindung ein Bereich zu verstehen, der dem Messgasraum zugewandt ist und in dem Messgasraum angeordnet sein kann.

Im Rahmen der vorliegenden Erfindung ist daher unter einem gasseitigen Abschnitt eines Bauteils, wie beispielsweise dem gasseitigen Sensorabschnitt oder einem Endabschnitt eines äußeren oder inneren Schutzrohrs, ein Sensorabschnitt oder Endabschnitt des äußeren oder inneren Schutzrohrs zu verstehen, der dem Messgasraum zugewandt ist und in diesem oder an diesem angeordnet sein kann.

Unter einem gehäuseseitigen Abschnitt, wie beispielsweise dem gehäuseseitigen Endabschnitt des äußeren oder des inneren Schutzrohrs, ist im Rahmen der vorliegenden Erfindung ein Abschnitt zu verstehen, der dem Fühlergehäuse des Messfühlers zugewandt ist und in diesem oder an diesem angeordnet sein kann.

Der Messfühler kann beispielsweise als Fingersonde ausgeführt werden, also beispielsweise als Lambdasonde mit einem tubusförmigen Aufbau. Da der Messfühler insbesondere im Bereich der Kraftfahrzeugtechnik einsetzbar ist, kann es sich bei dem Messgasraum insbesondere um einen Abgastrakt einer Brennkraftmaschine handeln und bei dem Gas insbesondere um ein Abgas.

Durch die erfindungsgemäße Konstruktion des Messfühlers wird die thermomechanische Robustheit der Verbindung der Schutzrohre mit dem Fühlergehäuse erhöht. Dies ist insbesondere bei Anwendungen vor einem Turbolader relevant, bei dem hohe absolute Temperaturen vorherrschen können. Ferner ist dies relevant für Anwendungen, bei denen Temperaturwechsel mit großen Temperaturhüben und großen Temperaturgradienten vorherrschen. Durch die erfindungsgemäße Konstruktion des Messfühlers kann eine Befestigung der Schutzrohre, wie beispielsweise durch eine Schweißnaht, komplett aus dem heißen Bereich des Messgasraums zurückgezogen werden. Dabei ist insbesondere eine radiale oder axiale Schweißung des äußeren Schutzrohrs möglich. Eine derartige Befestigung ist robuster im Vergleich mit einer gemeinsamen Schweißung eines äußeren und eines inneren Schutzrohrs. Daher ist die Schweißverbindung des äußeren Schutzrohrs an dem Fühlergehäuse robuster als eine Schweißnaht im Bereich des heißen Abgases wie sie bei Messfühlern aus dem Stand der Technik vorliegt. Insbesondere reduziert sich mit zunehmendem Abstand von dem heißen Abgas die Beanspruchung auf die Verbindung. Die Temperatur sinkt beispielsweise um ca. 10 bis 20 °C pro Millimeter Abstand zu dem Messgasraum. Das innere Schutzrohr benötigt keine Aufweitung des Durchmessers und wird einfach in das Fühlergehäuse gesteckt. In diesem Fall kann es erforderlich sein, dass das Fühlergehäuse in dem Bereich, in dem normalerweise das innere Schutzrohr mit dem Abschnitt mit dem aufgeweiteten Durchmesser an dem Fühlergehäuse aufliegt, das Fühlergehäuse einen der Aufweitung entsprechenden größeren Durchmesser aufweist, damit das äußere Schutzrohr an dem Fühlergehäuse anliegt. Eine Hutze oder ein Deckel an dem äußeren Schutzrohr ist beispielsweise robuster als nur ein Lochbund an dem äußeren Schutzrohr mit einer durchgesteckten Hutze an dem inneren Schutzrohr. Ferner kann eine Dichtscheibe zwischen dem äußeren Schutzrohr und einem Befestigungselement entfallen. Durch Ausbildung des Befestigungselements, wie beispielsweise eines Außengewindes, an dem äußeren Schutzrohr, das beispielsweise durch ein Tiefziehverfahren mit diesem integral ausgebildet sein kann, wird die Werkstoffanforderung des Fühlergehäuses zu günstigeren Werkstoffen hin reduziert. Insbesondere ist erfindungsgemäß vorgesehen, dass sich die Schweißnaht außerhalb der heißen Abgaszone hinter einem solchen Außengewinde befindet.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine schematische Querschnittsdarstellung eines bekannten Messfühlers,
- Figur 2: einen typischen Temperaturverlauf über die Zeit sowohl an einem Schutzrohr als auch an einem Fühlergehäuse,
- Figur 3: eine Schnittdarstelllung eines erfindungsgemäßen Messfühlers,
- Figur 4: eine erste beispielhafte Schweißverbindung,
- Figur 5: eine zweite beispielhafte Schweißverbindung,
- Figur 6: eine Modifikation des gehäuseseitigen Endabschnitts des äußeren Schutzrohrs, und
- Figur 7: eine teilweise schematische Querschnittsdarstellung des Messfühlers in einem an einem Messgasraum montierten Zustand.

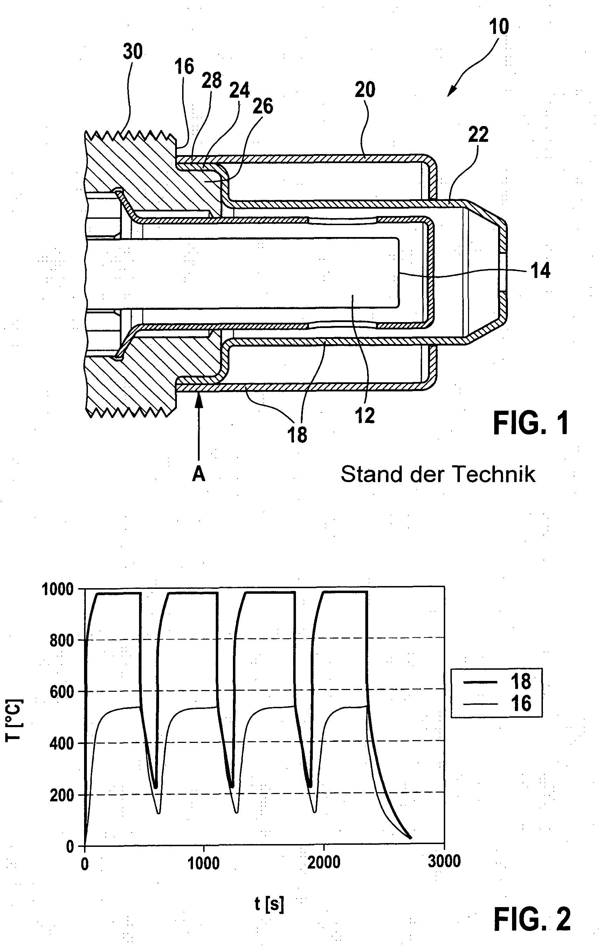

Figur 1 zeigt eine schematische Querschnittsdarstellung eines bekannten Messfühlers 10. Der Messfühler 10 weist ein Sensorelement 12 auf, das mit einem dem Messgas ausgesetzten, gasseitigen Sensorabschnitt 14 aus einem Fühlergehäuse 16 herausragt. Dieser gasseitige Sensorabschnitt 14 des Sensorelements 12 wird von außen nach innen gesehen zunächst von einem Doppelschutzrohr 18 umgeben. Dieses Doppelschutzrohr 18 umfasst ein äußeres Schutzrohr 20 und ein inneres Schutzrohr 22. Ein gehäuseseitiger Endabschnitt 24 des inneren Schutzrohrs 22 ist dabei auf einen Ringabsatz 26 des Fühlergehäuses 16 aufgeschoben. Dazu weist der gehäuseseitige Endabschnitt 24 des inneren Schutzrohrs 22 eine Querschnittserweiterung auf, so dass dieser Abschnitt als Ringschulter ausgebildet sein kann. Ein gehäuseseitiger Endabschnitt 28 des äußeren Schutzrohrs 20 ist wiederum in Längserstreckungsrichtung des Messfühlers 10 gesehen auf den gehäuseseitigen Endabschnitt 24 des inneren Schutzrohrs 22, und damit, allerdings mittelbar, auf den Ringabsatz 26 des Fühlergehäuses 16, aufgeschoben. Zur Festlegung des Doppelschutzrohrs 18 an dem Fühlergehäuse 16 wird schließlich eine Schweißnaht an der durch einen Pfeil A angegebenen Stelle gesetzt, welche von dem gehäuseseitigen Endabschnitt 28 des äußeren Schutzrohrs 20 durch den darunterliegenden gehäuseseitigen Endabschnitt 24 des inneren Schutzrohrs 22 bis in das Fühlergehäuse 16, und insbesondere in den Ringabsatz 26 des Fühlergehäuses 16, reicht. Um den Messfühler 10 an dem Messgasraum zu befestigen, weist das Fühlergehäuse 16 ein Außengewinde 30 auf. In einem an dem Messgasraum montierten Zustand befindet sich die Schweißnaht an der mit dem Pfeil A angegeben Stelle innerhalb des Messgasraums.

Wie der Darstellung der Figur 2 zu entnehmen ist, die einen typischen Verlauf der Temperatur T über die Zeit t sowohl im Bereich des Doppelschutzrohrs 18 als auch im Bereich des Fühlergehäuses 16 angibt, kommt es während eines Betriebs des Messfühlers 10 zu deutlichen Temperaturhüben. Diese Temperaturhübe können im Bereich des Doppelschutzrohres 18 ungefähr 800 °C und im Bereich des Fühlergehäuses 16 ungefähr 300 °C betragen. Wie der Darstellung weiter zu entnehmen ist, nimmt die Temperatur T von dem Messgasraum im Bereich des Doppelschutzrohrs 18 ausgehend zu dem Fühlergehäuse 16 hin deutlich ab. Diese Temperaturunterschiede und insbesondere die starken Temperaturhübe über die Zeit t wirken sich negativ auf die Stabilität der Schweißverbindung aus.

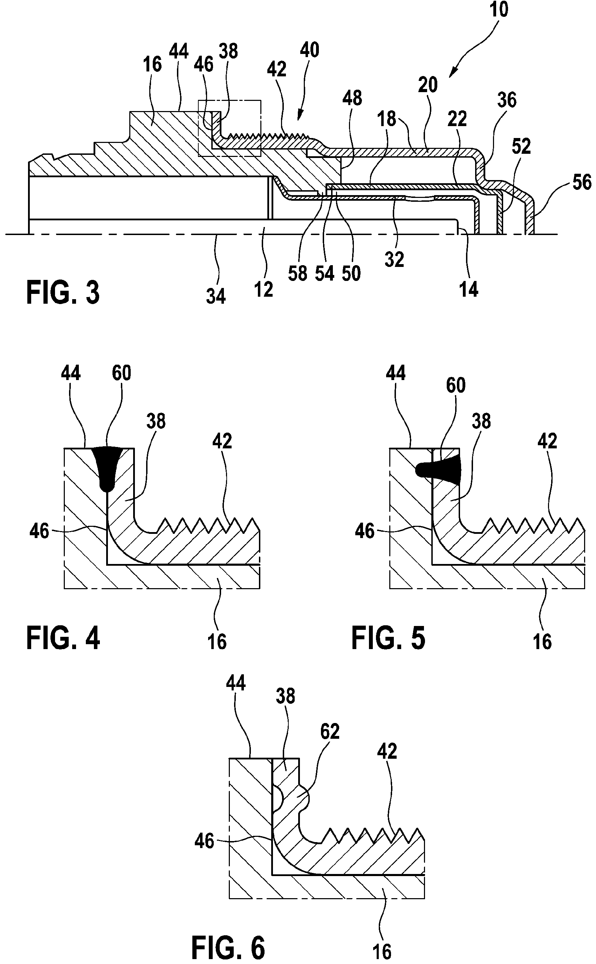

Die Figur 3, die eine schematische Querschnittsdarstellung einer ersten Ausführungsform eines erfindungsgemäßen Messfühlers ist, vermeidet diese Nachteile und insbesondere die thermische Belastung im Bereich einer Befestigung des Doppelschutzrohres an dem Fühlergehäuse. Das in der Figur 3 dargestellte Ausführungsbeispiel eines erfindungsgemäßen Messfühlers 10 ist beispielhaft als eine Lambdasonde ausgestaltet. Die Lambdasonde dient zur Steuerung eines Luft-Kraftstoff-Gemisches einer Brennkraftmaschine, um mittels einer Messung der Konzentration des Sauerstoffgehalts im Abgas ein möglichst stöchiometrisches Gemisch einstellen zu können, so dass durch eine möglichst optimale Verbrennung der Schadstoffausstoß minimiert wird. Daher kann es sich bei dem Messgasraum im Rahmen der vorliegenden Erfindung um einen Abgastrakt einer Brennkraftmaschine handeln.

Diese Lambdasonde wird nachfolgend als Ausführungsbeispiel für einen Messfühler zur Bestimmung mindestens einer physikalischen und/oder chemischen Eigenschaft eines Messgases, insbesondere der Temperatur oder der Konzentration einer Gaskomponente, insbesondere im Abgas einer Brennkraftmaschine, beschrieben. Insbesondere werden die Unterschiede zu dem bekannten Messfühler der Figur 1 beschrieben, wobei gleiche Bauteile mit gleichen Bezugszeichen versehen sind.

Der Messfühler 10 weist ein Sensorelement 12 auf, das mit einem einem Messgas ausgesetzten, gasseitigen Sensorabschnitt 14 aus einem Fühlergehäuse 16 herausragt. Dieser gasseitige Sensorabschnitt 14 des Sensorelements 12 wird von außen nach innen gesehen zunächst von einem Doppelschutzrohr 18 umgeben. Dieses Doppelschutzrohr 18 umfasst ein äußeres Schutzrohr 20 und ein inneres Schutzrohr 22. Des Weiteren ist bei diesem Ausführungsbeispiel ein zusätzliches zentrales Schutzrohr 32 vorgesehen, welches das Sensorelement 12 innerhalb des Doppelschutzrohrs 18 umgibt.

Es sei darauf verwiesen, dass das Vorhandensein eines zentralen Schutzrohrs 32 jedoch keine Voraussetzung für die Umsetzung der Erfindung darstellt. Vielmehr lässt sich die Erfindung normalerweise auch in einem Messfühler 10 umsetzen, welcher lediglich ein Doppelschutzrohr 18 und kein zusätzliches zentrales Schutzrohr 32 aufweist.

Bei dem vorliegenden Beispiel eines erfindungsgemäßen Messfühlers 10, nämlich hier beispielhaft einer Lambdasonde, sind des Weiteren sämtliche Schutzrohre 20, 22, 32 an dem Fühlergehäuse 16 befestigt. Auf Einzelheiten der Befestigung wird später ausführlich eingegangen. Des Weiteren weisen sämtliche Schutzrohre 20, 22, 32 geeignete Öffnungen bzw. Durchbrechungen in ihrer Wand auf, um eine Kontaktierung des Sensorelements 12 mit dem zu untersuchenden Messgas zu erlauben. Diese Öffnungen werden hier nicht eingehend beschrieben.

Bei dem hier vorliegenden Aufbau des Messfühlers 10 weist der Messfühler 10 einen rotationssymmetrischen Aufbau um eine Längs- oder Mittelachse 34 des Fühlergehäuses 16 auf. Erfindungsgemäß weist das äußere Schutzrohr 20 einen gasseitigen Endabschnitt 36 und einen gehäuseseitigen Endabschnitt 38 auf. Ferner weist das äußere Schutzrohr 20 ein Befestigungselement 40 auf, das zumindest teilweise an dem gehäuseseitigen Endabschnitt 38 des äußeren Schutzrohrs 20 aufgenommen ist. Das Befestigungselement 40 weist ein Außengewinde 42 auf. Das Befestigungselement 40 ist vorgesehen, um den Messfühler an einem Messgasraum zu befestigen. Das Befestigungselement 40 bzw. das Außengewinde 42 und das äußere Schutzrohr 20 sind einstückig ausgebildet. Diese Art der Ausbildung ist beispielsweise durch Tiefziehen des äußeren Schutzrohrs 20 möglich. Insbesondere weist das Fühlergehäuse 16 einen Ringabsatz 44 auf, der eine senkrecht zu der Mittelachse verlaufende Fläche 46 aufweist, an der der gehäuseseitige Endabschnitt 38 des äußeren Schutzrohrs 20 befestigt ist.

In einen gasseitigen Gehäuseabschnitt 48 des Fühlergehäuses 16, insbesondere in eine Stirnfläche des Fühlergehäuses 16, ist eine Sackbohrung 50 eingebracht. Das innere Schutzrohr 22 weist einen gasseitigen Endabschnitt 52 und einen gehäuseseitigen Endabschnitt 54 auf. Der gehäuseseitige Endabschnitt 54 des inneren Schutzrohrs 22 ist in die Sackbohrung 50 eingesteckt. Dadurch ist der gehäuseseitige Endabschnitt 54 des inneren Schutzrohrs 22 in dem Fühlergehäuse 16 festgelegt. Durch das Einstecken des inneren Schutzrohrs 22 in die Sackbohrung 50 ergibt sich zunächst eine genaue Zentrierung des inneren Schutzrohrs 22 und gegebenenfalls eine Klemmkraft gegenüber dem Fühlergehäuse 16. Das innere Schutzrohr 22 weist insbesondere eine zylindrische Formgebung auf, die in dem gehäuseseitigen Endabschnitt 54 keine Aufweitung des Durchmessers aufweist. Daher kann es in Abhängigkeit von der Wandstärke des äußeren Schutzrohrs 20 erforderlich sein, dass das Fühlergehäuse 16 einen der üblichen Aufweitung entsprechenden größeren Durchmesser aufweist, damit das äußere Schutzrohr 20 an dem Fühlergehäuse anliegt.

Der gasseitige Endabschnitt 52 des inneren Schutzrohrs 22 weist eine gerundet ausgeführte Querschnittsverjüngung auf. Entsprechend ist der gasseitige Endabschnitt 36 des äußeren Schutzrohrs 20 so ausgestaltet, dass dieser den gasseitigen Endabschnitt 52 des inneren Schutzrohrs 20 in axialer und radialer Richtung formschlüssig festlegt. Mit anderen Worten ist der gasseitige Endabschnitt 36 des äußeren Schutzrohrs 22 auf den gasseitigen Endabschnitt 54 des inneren Schutzrohrs 22 aufsteckbar. Die Innenseite des gasseitigen Endabschnitts 36 des äußeren Schutzrohrs entspricht dabei der äußeren Form des gasseitigen Endabschnitts 52 des inneren Schutzrohrs 22. Demnach weist der gasseitige Endabschnitt 36 des äußeren Schutzrohrs 20 einen Übergangsbereich zwischen zwei durchmesserverschiedenen Abschnitten des äußeren Schutzrohrs 20 auf. Dieser gasseitige Endabschnitt 36 ist als Hutze 56 oder auch Deckel ausgebildet, welcher auf den gasseitigen Endabschnitt 52 des inneren Schutzrohrs 22 aufsteckbar ist. So wird in besonders vorteilhafter Weise über ein Einstecken des inneren Schutzrohrs 22 in die Sackbohrung 50 ein Aufstecken des äußeren Schutzrohrs 20 auf das innere Schutzrohr 22 das innere Schutzrohr 22 sicher am Fühlergehäuse 16 festgelegt, ohne dass das innere Schutzrohr 22 in dem gehäuseseitigen Endabschnitt 54 eine Schweißnaht zur festen Verbindung benötigt.

Das zusätzliche zentrale Schutzrohr 32 weist einen geringeren Durchmesser als das innere Schutzrohr 22 auf. Das zentrale Schutzrohr 32 ist über Zentriernasen 58 in einer mittigen Öffnung in dem Fühlergehäuse 16 positioniert, welches sich von der Sackbohrung 50 ausgehend in Richtung der Mitte des Fühlergehäuses 16 erstreckt. Die Zentriernasen 58 sind um ca. 1,3 mm von der Stirnfläche des Fühlergehäuses 16 in dem gasseitigen Endabschnitt zurückgesetzt angebracht. Zur axialen Festlegung des zentralen Schutzrohrs 32 ist diese im Inneren des Fühlergehäuses 16 in geeigneter Weise aufgeweitet und verklemmt.

Die Figur 4 zeigt einen schematischen Ausschnitt im Bereich der Befestigung des gehäuseseitigen Endabschnitts 38 des äußeren Schutzrohrs 20 an dem Fühlergehäuse 16. Genauer ist der gehäuseseitige Endabschnitt 38 des äußeren Schutzrohrs 20 an der senkrecht zu der Mittelachse 34 verlaufende Fläche 46 des Ringabsatzes 44 befestigt. Die Befestigung kann dabei über eine Schweißung 60 erfolgen, die in radialer Richtung bezüglich der Mittelachse 34 verläuft. Von dem Messgasraum aus gesehen befindet sich die Schweißung 60 somit hinter dem Außengewinde 42. Mit anderen Worten ist die Schweißung 60 weiter von dem Messgasraum oder dem gasseitigen Endabschnitt 36 des äußeren Schutzrohrs 20 entfernt als das Außengewinde 42.

Die Figur 5 zeigt einen schematischen Ausschnitt im Bereich einer anderen Befestigung des gehäuseseitigen Endabschnitts 38 des äußeren Schutzrohrs 20 an dem Fühlergehäuse 16. Genauer ist auch bei diesem Beispiel der gehäuseseitige Endabschnitt 38 des äußeren Schutzrohrs 20 an der senkrecht zu der Mittelachse 34 verlaufende Fläche 46 des Ringabsatzes 44 befestigt. Die Befestigung kann dabei aber über eine Schweißung 60 erfolgen, die in axialer Richtung bezüglich der Mittelachse 34 verläuft. Von dem Messgasraum aus gesehen befindet sich die Schweißung 60 auch bei diesem Beispiel hinter dem Außengewinde 42. Mit anderen Worten ist die Schweißung 60 weiter von dem Messgasraum oder dem gasseitigen Endabschnitt 36 des äußeren Schutzrohrs 20 entfernt als das Außengewinde 42.

Figur 6 stellt eine Modifikation des gehäuseseitigen Endabschnitts 38 des äußeren Schutzrohrs 20 dar, die mit den in den Figuren 5 und 6 gezeigten Schweißverbindungen kombiniert werden kann. Genauer weist das äußere Schutzrohr 20 in dem gehäuseseitigen Endabschnitt 38 eine Wölbung 62 auf, die von der senkrecht zu der Mittelachse 34 verlaufenden Fläche 46 des Ringabsatzes 44 vorsteht. Diese Wölbung 62 sorgt für eine zusätzliche Dichtfunktion und wird bei einer Montage des Messfühlers 10 an dem Messgasraum gegen die senkrecht zu der Mittelachse 34 verlaufende Fläche 46 gedrückt bzw. angepresst, so dass eine gasdichte Verbindung zwischen dem äußeren Schutzrohr 20 und dem Fühlergehäuse 16 gebildet wird. Ein eventuell aus dem im Inneren des äußeren Schutzrohres 20 entlang des Gehäuses 16 zu dem gehäuseseitigen Endabschnitt 38 gelangendes Gas kann daher nicht entweichen.

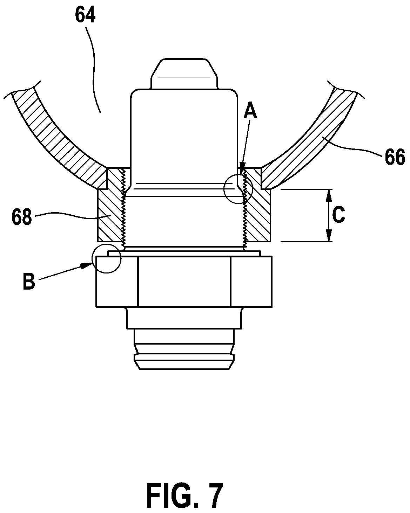

Figur 7 zeigt eine Querschnittsdarstellung des Messfühlers 10 in einem an einem Messgasraum 64 montierten Zustand. Der Messgasraum 64 ist beispielsweise ein Raum innerhalb eines Abgasrohrs 66, das einen Befestigungsstutzen 68 mit einem Innengewinde aufweist. Insbesondere ist der Messfühler 10 mittels des Außengewindes 42, das in das Innengewinde des Befestigungsstutzens 68 greift, befestigt. Durch einen Pfeil B ist dabei eine Stelle gekennzeichnet, an der sich eine Schweißnaht 60 befinden kann, die bezüglich der Mittelachse 34 in radialer oder axialer Richtung verlaufen kann, wie in den Figuren 4 und 5 gezeigt ist. Wie deutlich zu sehen ist, befindet sich die Schweißnaht 60 in einem Abstand C zu dem Messgasraum 64. Der Abstand C zu dem Messgasraum 64 kann beispielsweise 10 mm betragen. Da die Temperatur von dem Messgasraum 64 ausgehend in Richtung zu dem Fühlergehäuse 16 mit zunehmendem Abstand von diesem um ungefähr 10 bis 20 °C/mm abnimmt, liegt die Temperatur während eines Betriebs an der Stelle B um 100 bis 200 °C unterhalb der in dem Messgasraum 64 vorherrschenden Temperatur. Zum Vergleich ist die Position der Schweißnaht bei aus dem Stand der Technik bekannten Messfühlern, wie beispielsweise dem in Figur 1 gezeigten, durch den Pfeil A angegeben. Dies zeigt, dass die Schweißnaht an der Stelle A bei dem bekannten Messfühler dem Messgasraum 64 unmittelbar ausgesetzt ist. Der Abstand C der Schweißnaht 60 zu dem Messgasraum 64 bewirkt dabei, dass eine thermomechanische Robustheit vergrößert wird, da zum einen die dort vorherrschenden absoluten Temperaturen wie erläutert deutlich niedriger als in dem Messgasraum 64 sind und zum anderen aus diesem Grund die Temperaturhübe insgesamt niedriger ausfallen.

## Patentansprüche

1. Messfühler (10) zur Bestimmung mindestens einer Eigenschaft eines Messgases in einem Messgasraum (64), insbesondere der Temperatur oder der Konzentration einer Gaskomponente, insbesondere im Abgas einer Brennkraftmaschine, mit einem Sensorelement (12), das mit einem dem Messgas aussetzbaren, gasseitigen Sensorabschnitt (14) aus einem Fühlergehäuse (16) herausragt, und mit einem den Sensorabschnitt (14) umgebenden Doppelschutzrohr (18), welches mindestens ein äußeres Schutzrohr (20) und mindestens ein inneres Schutzrohr (22) aufweist, wobei das äußere Schutzrohr (20) einen gehäuseseitigen Endabschnitt (38) und einen gasseitigen Endabschnitt (36) aufweist, wobei der Messfühler (10) mindestens ein Befestigungselement (40) zur Befestigung des Messfühlers (10) an dem Messgasraum (64) aufweist, wobei in einem an dem Messgasraum (64) befestigten Zustand das äußere Schutzrohr (20) mit dem gehäuseseitigen Endabschnitt (38) an dem Fühlergehäuse (16) außerhalb des Messgasraums (64) befestigt ist, wobei das Befestigungselement (40) mindestens ein Außengewinde (42) aufweist, **dadurch gekennzeichnet, dass**
das Befestigungselement (40) zumindest teilweise in den gehäuseseitigen Endabschnitt (38) des äußeren Schutzrohrs (20) aufgenommen ist und der gehäuseseitige Endabschnitt (38) des äußeren Schutzrohrs (20) mit dem Fühlergehäuse (16) an mindestens einer Schweißung (60), die sich weiter entfernt von dem gasseitigen Endabschnitt (36) des äußeren Schutzrohrs (20) befindet als das Befestigungselement (40), verschweißt ist.

2. Messfühler (10) nach einem der Anspruch 1, wobei das Fühlergehäuse (16) eine Mittelachse (34) aufweist und sich die Schweißung (60) in axialer oder radialer Richtung bezüglich der Mittelachse (34) erstreckt.

3. Messfühler (10) nach dem vorhergehenden Anspruch, wobei das Fühlergehäuse (16) einen Ringabsatz (44) aufweist und der gehäuseseitige Endabschnitt (38) des äußeren Schutzrohrs (20) an einer senkrecht zu der Mittelachse verlaufenden Fläche (46) des Ringabsatzes (44) festgelegt ist.

4. Messfühler (10) nach dem vorhergehenden Anspruch, wobei der gehäuseseitige Endabschnitt (38) des äußeren Schutzrohrs (20) eine Wölbung (62) aufweist, die von der senkrecht zu der Mittelachse (34) verlaufenden Fläche (46) des Ringabsatzes (44) vorsteht und ausgebildet ist, in einem montierten Zustand des Messfühlers (10) mit der senkrecht zu der Mittelachse (34) verlaufenden Fläche (46) des Ringabsatzes (44) eine dichte, insbesondere gasdichte, Verbindung zu bilden.

5. Messfühler (10) nach einem der vorhergehenden Ansprüche, wobei das innere Schutzrohr (22) einen gehäuseseitigen Endabschnitt (54) aufweist und der gehäuseseitige Endabschnitt (54) des inneren Schutzrohrs (22) in das Fühlergehäuse (16), insbesondere in eine Sackbohrung (50) in dem Fühlergehäuse (16), eingesteckt ist.

6. Messfühler (10) nach dem vorhergehenden Anspruch, wobei der gehäuseseitige Endabschnitt (54) des inneren Schutzrohrs (22) in dem Fühlergehäuse (16) zentriert ist und insbesondere mittels Zentriernasen (58), welche an dem Fühlergehäuse (16) und/oder an dem inneren Schutzrohr (22) ausgebildet sind, zentriert ist.

7. Messfühler (10) nach Anspruch 2, wobei das innere Schutzrohr (22) einen gasseitigen Endabschnitt (52) aufweist und der gasseitige Endabschnitt (36) des äußeren Schutzrohrs (20) so ausgestaltet ist, dass dieser den gasseitigen Endabschnitt (52) des inneren Schutzrohrs (22) in axialer und/oder radialer Richtung formschlüssig festlegt.

8. Messfühler (10) nach einem der vorhergehenden Ansprüche, wobei der gasseitige Endabschnitt (36) des äußeren Schutzrohrs (20) in Richtung der Gasseite gesehen eine Querschnittsverjüngung aufweist.

9. Messfühler (10) nach einem der vorhergehenden Ansprüche, wobei das Doppelschutzrohr (18) ein zusätzliches zentrales Schutzrohr (32) umgibt.

## Claims

1. Measuring sensor (10) for determining at least one property of a gas to be measured in a gas measuring space (64), in particular the temperature or the concentration of a gas component, in particular in the exhaust gas of an internal combustion engine, having a sensor element (12) which projects out of a sensor housing (16) with a gas-side sensor section (14) which can be subjected to the gas to be measured, and having a double protective pipe (18) which surrounds the sensor section (14) and has at least one external protective pipe (20) and at least one internal protective pipe (22), wherein the external protective pipe (20) has a housing-side end section (38) and a gas-side end section (36), wherein the measuring sensor (10) has at least one attachment element (40) for attaching the measuring sensor (10) to the gas measuring space (64), wherein in a state in which it is attached to the gas measuring space (64) the external protective pipe (20) is attached to the housing-side end section (38) at the sensor housing (16) outside the gas measuring space (64), wherein the attachment element (40) has at least one external thread (42), **characterized in that** the attachment element (40) is accommodated at least partially in the housing-side end section (38) of the external protective pipe (20), and the housing-side end section (38) of the external protective pipe (20) is welded to the sensor housing (16) at at least one weld (60) which is located further away from the gas-side end section (38) of the external protective pipe (20) than the attachment element (40).

2. Measuring sensor (10) according to one of Claim 1, wherein the sensor housing (16) has a central axis (34), and the weld (60) extends in the axial or radial direction with respect to the central axis (34).

3. Measuring sensor (10) according to the preceding claim, wherein the sensor housing (16) has an annular shoulder (44), and the housing-side end section (38) of the external protective pipe (20) is secured to a face (46) of the annular shoulder (44) which runs perpendicular with respect to the central axis.

4. Measuring sensor (10) according to the preceding claim, wherein the housing-side end section (38) of the external protective pipe (20) has a bulge (62) which protrudes from the face (46) of the annular shoulder (44) which runs perpendicularly with respect to the central axis (44), and said bulge (62) is designed to form, in a mounted state of the measuring sensor (10), a tight, in particular gas-tight, connection to the face (46) of the annular shoulder (44) which runs perpendicularly with respect to the central axis (34).

5. Measuring sensor (10) according to one of the preceding claims, wherein the internal protective pipe (22) has a housing-side end section (54), and the housing-side end section (54) of the internal protective pipe (22) is plugged into the sensor housing (16), in particular into a blind hole (50) in the sensor housing (16).

6. Measuring sensor (10) according to the preceding claim, wherein the housing-side end section (54) of the internal protective pipe (22) is centred in the sensor housing (16) and is centred, in particular, by means of centring projections (58) which are formed on the sensor housing (16) and/or on the inner protective pipe (22).

7. Measuring sensor (10) according to Claim 2, wherein the inner protective pipe (22) has a gas-side end section (52), and the gas-side end section (36) of the external protective pipe (20) is configured in such a way that it secures the gas-side end section (52) of the internal protective pipe (22) in a frictionally locking fashion in the axial and/or radial direction.

8. Measuring sensor (10) according to one of the preceding claims, wherein the gas-side end section (36) of the external protective pipe (20) has a cross-sectional taper when viewed in the direction of the gas side.

9. Measuring sensor (10) according to one of the preceding claims, wherein the double protective pipe (18) surrounds an additional central protective pipe (32).

## Revendications

1. Capteur de mesure (10) destiné à déterminer au moins une propriété d'un gaz à mesurer dans un espace de gaz à mesurer (64), en particulier la température ou la concentration d'un constituant du gaz, en particulier dans les gaz d'échappement d'un moteur à combustion interne, comportant un élément capteur (12) qui dépasse d'un boîtier de capteur (16) par une section de capteur (14) côté gaz pouvant être exposée au gaz à mesurer, et comportant un tube de protection double (18) entourant la section de capteur (14), lequel comporte au moins un tube de protection extérieur (20) et au moins un tube de protection intérieur (22), dans lequel le tube de protection extérieur (20) comporte une section d'extrémité côté boîtier (38) et une section d'extrémité côté gaz (36), dans lequel le capteur de mesure (10) comporte au moins un élément de fixation (40) pour la fixation du capteur de mesure (10) à l'espace de gaz à mesurer (64), dans lequel, dans un état fixé à l'espace de gaz à mesurer (64), le tube de protection extérieur (20) est fixé par la section d'extrémité côté boîtier (38) au boîtier de capteur (16) à l'extérieur de l'espace de gaz à mesurer (64), dans lequel l'élément de fixation (40) comporte au moins un filetage extérieur (42), **caractérisé en ce que** l'élément de fixation (40) est reçu au moins partiellement dans la section d'extrémité côté boîtier (38) du tube de protection extérieur (20) et **en ce que** la section d'extrémité côté boîtier (38) du tube de protection extérieur (20) est soudée au boîtier de capteur (16) au niveau d'au moins une soudure (60) qui se trouve plus loin de la section d'extrémité côté gaz (36) du tube de protection extérieur (20) que l'élément de fixation (40).

2. Capteur de mesure (10) selon la revendication 1, dans lequel le boîtier de capteur (16) comporte un axe central (34) et la soudure (60) s'étend en direction axiale ou radiale par rapport à l'axe central (34).

3. Capteur de mesure (10) selon la revendication précédente, dans lequel le boîtier de capteur (16) comporte une saillie annulaire (44) et la section d'extrémité côté boîtier (38) du tube de protection extérieur (20) est fixée à une surface (46) de la saillie annulaire (44) s'étendant perpendiculairement à l'axe central.

4. Capteur de mesure (10) selon la revendication précédente, dans lequel la section d'extrémité côté boîtier (38) du tube de protection extérieur (20) présente un bombement (62) qui fait saillie perpendiculairement à la surface (46) de la saillie annulaire (44) s'étendant perpendiculairement à l'axe central (34) et est réalisée de manière à former une liaison étanche, notamment étanche au gaz, à l'état monté du capteur de mesure (10) avec la surface (46) de la saillie annulaire (44) s'étendant perpendiculairement à l'axe central (34).

5. Capteur de mesure (10) selon l'une quelconque des revendications précédentes, dans lequel le tube de protection intérieur (22) comporte une section d'extrémité côté boîtier (54) et la section d'extrémité côté boîtier (54) du tube de protection intérieur (22) est insérée dans le boîtier de capteur (16), en particulier dans un trou borgne (50) ménagé dans le boîtier de capteur (16).

6. Capteur de mesure (10) selon la revendication précédente, dans lequel la section d'extrémité côté boîtier (54) du tube de protection intérieur (22) est centrée dans le boîtier de capteur (16), en particulier au moyen d'ergots de centrage (58) qui sont réalisés sur le boîtier de capteur (16) et/ou sur le tube de protection intérieur (22).

7. Capteur de mesure (10) selon la revendication 2, dans lequel le tube de protection intérieur (22) comporte une section d'extrémité côté gaz (52) et la section d'extrémité côté gaz (36) du tube de protection extérieur (20) est configurée de manière à ce qu'elle immobilise par complémentarité de forme en direction axiale et/ou radiale la section d'extrémité côté gaz (52) du tube de protection intérieur (22).

8. Capteur de mesure (10) selon l'une quelconque des revendications précédentes, dans lequel la section d'extrémité côté gaz (36) du tube de protection extérieur (20) comporte un étranglement en section transversale lorsqu'on l'observe vers le côté gaz.

9. Capteur de mesure (10) selon l'une quelconque des revendications précédentes, dans lequel le tube de protection double (18) entoure un tube de protection central supplémentaire (32).
